# EUROPEAN PATENT SPECIFICATION

(11) **EP 3 610 290 B1**
(45) Date of publication and mention of the grant of the patent: **06.07.2022**
(21) Application number: 17718774.7
(22) Date of filing: 12.04.2017
(51) Int. Cl.: G01S 15/10

(54) **ROBUST AND ACCURATE CLOSE RANGE DETECTION FOR ULTRASONIC LEVEL MEASUREMENT**
ROBUSTE UND GENAUE NAHBEREICHSDETEKTION FÜR DIE ULTRASCHALL-FÜLLSTANDMESSUNG
DÉTECTION ROBUSTE ET PRÉCISE À COURTE DISTANCE POUR LA MESURE DE NIVEAU PAR ULTRASONS

(43) Date of publication of application: 19.02.2020
(73) Proprietor: Siemens Aktiengesellschaft, 80333 München (DE)
(72) Inventor: LIU, Jing, Peterborough, Ontario K9L 0A6 (CA)
(74) Representative: Patentanwaltskanzlei WILHELM & BECK
(86) International application number: PCT/US2017/027095
(87) International publication number: WO 2018/190816

(56) References cited:
- WO-A2-2006/099601
- CA-A1- 2 405 658
- US-A- 4 596 144
- US-A1- 2003 039 171

## Description

### BACKGROUND

### 1. Field

Disclosed embodiments are generally related to pulse-echo ranging and, more particularly, to a method for detecting a reflected signal.

### 2. Description of the Related Art

Pulse-echo ranging systems, or time-of-flight ranging systems, are used in level measurement applications to determine the distance to a reflective surface of a material, such as liquid, slurry or solid, by measuring how long after transmission of a pulse of energy it takes to receive the reflected signal (i.e. the echo).

Acoustic pulse-echo ranging systems generally include a transceiver and a signal processor. The transceiver serves the dual role of transmitting pulses and receiving the reflected signals. A profile is generated from the received signals. A reflected signal is identified in the profile by the signal processor, and the distance or range of the target is calculated based on the propagation time of the reflected signal.

Close in range measurement of a level target can be difficult using a pulse echo ranging system. This is due to interference issues that occur when close to the target. These interference issues create strong energies that are visible in the signal profile, which is generally known as "ringing down". The interference may be coming from a number of sources such as the strength of near reflections from the measuring system and dispersion within the pulse-echo ranging system's transmission path. Preferably the impact of "ringing down" when doing close in range measurement can be avoided.

Document WO 2006/099601 A2 is the closest prior art for the features of the method and the apparatus according to the preamble. Further documents concerning the features of the method and the apparatus according to the characterizing part are CA 2 405 658A1, US 4 596 144 A and US 2003/039171 A1.

### SUMMARY

Briefly described, aspects of the present disclosure relate to providing a method of detecting the reflected signal by using the energy decay of the reflected signal rather than only the peak of a signal to provide distance between an apparatus and a target.

The object is met by the independent claims. Further preferred embodiments are part of the dependent claims.

### BRIEF DESCRIPTION OF THE DRAWINGS

Fig. 1 shows a diagram schematically illustrating a pulse-echo ranging system.
Fig. 2 is a flow chart of a method for determining the distance to a target.
Fig. 3 shows a reflective signal amplitude profile of the received reflected signals.
Fig. 4 shows a reflective signal amplitude profile of the received reflected signals with the trend of the energy decay illustrated.
Fig. 5 is a close up view of the reflected signal amplitude profile and trend illustrated in Fig. 4.
Fig. 6 is a diagram illustrating the signals transmitted and reflected from a target.

### DETAILED DESCRIPTION

To facilitate an understanding of embodiments, principles, and features of the present disclosure, they are explained hereinafter with reference to implementation in illustrative embodiments. Embodiments of the present disclosure, however, are not limited to use in the described systems or methods.

The components and materials described hereinafter as making up the various embodiments are intended to be illustrative and not restrictive. Many suitable components and materials that would perform the same or a similar function as the materials described herein are intended to be embraced within the scope of embodiments of the present disclosure.

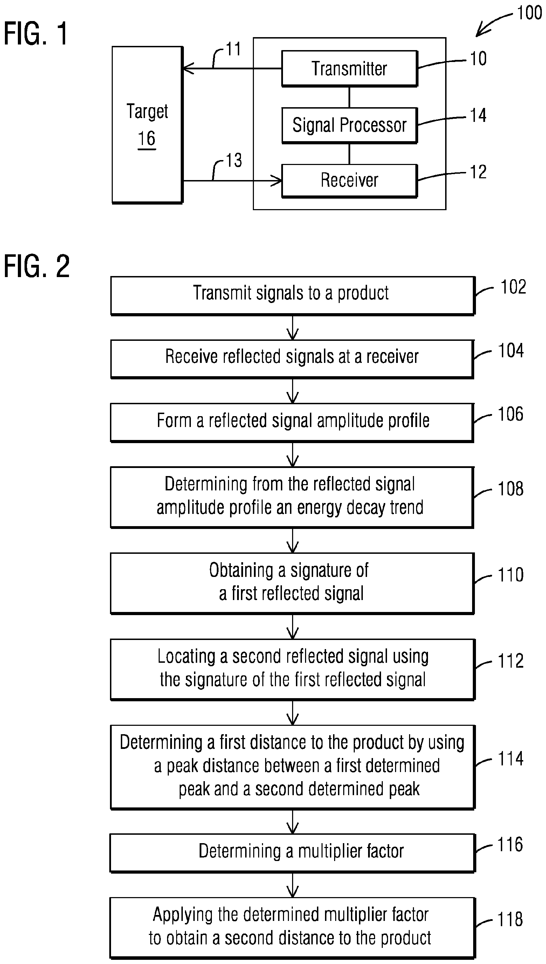

Referring to Fig. 1, an apparatus commonly referred to as a pulse-echo ranging system 100 uses ultrasonic, radar or microwave pulses and can include a transmitter 10 for transmitting signals 11 (i.e. pulses), a receiver 12 for receiving reflected signals 13 (i.e. echoes) of the energy signals 11 and a signal processor 14 for detecting and calculating the distance to the surface of a material 16 based on the analysis of the reflected signals 13. The distance is calculated based on the travel times of the transmitted signals 11 and the reflected signals 13. The transmitter 10 and receiver 12 may be housed in a single unit (i.e. a transceiver). In the embodiment discussed herein the transmitted signals are ultrasonic signals.

The transmitter 10 and receiver 12 are operably connected to a signal processor 14. The signal processor 14 may be one of many signal processors 14 that are able to take and analyse the reflected signals 13.

The signal processor 14 takes the reflected signals 13 and can form a reflected signal amplitude profile 9, also known as an echo amplitude profile. The reflected signal amplitude profile 9 represents the received reflected signal amplitudes as a function of their respective travel times. Each value of the reflected signal amplitude profile 9 corresponds to the amplitude of a reflected signal at a certain distance from the transmitter 10 and receiver 12.

Typically reflected signal detection focuses on the detection of the peaks of the reflected signals 13. Generally the reflected signals 13 have a concave (down facing) parabolic shape. When a target (i.e. product to be measured) is close the shape of the reflected signals 13 can become distorted. The reflected signals 13 may lose their parabolic shape and might have several small peaks instead of a single strong peak. This can make it difficult to detect the first peak of the reflected signals 13 in the reflected signal amplitude profile 9. Difficulty in detecting the first peak makes it difficult to determine the distance to the target 16. Furthermore, due to the effects of ringing down the first peak detected may not be the actual first peak since as the distance of the target 16 gets closer to the transmitter 10 interference makes it difficult to detect the actual first peak. The first true reflected signal is obscured by the effects of ringing down, and the reflected signal 13 shown in the reflected signal amplitude profile 9 can be the 2^{nd} or 3^{rd} reflection between the pulse-echo ranging system 100 surface of the target 16.

The inventor recognized that by using energy instead of the peak to determine where the first peak will be, the problem of not being able to identify the actual first peak can be avoided. While the peaks can become unrecognizable when the reflected signal shape may become distorted, the behaviour of the energy contained within the signal behaves in a predictable pattern that facilitates the accurate determination of the peak.

Discussion of the method for determining the distance between the pulse-echo ranging system 100 and the target 16 is made with reference to Figs. 2-5.

Fig. 2 sets forth the flow chart setting forth the method for determining the distance. In step 102 the transmitter 10 transmits a signal 11 to the target 16. The signal 11 can be an ultrasonic signal, a radar signal or a microwave signal. In step 104, reflected signals 13 are received at the receiver 12.

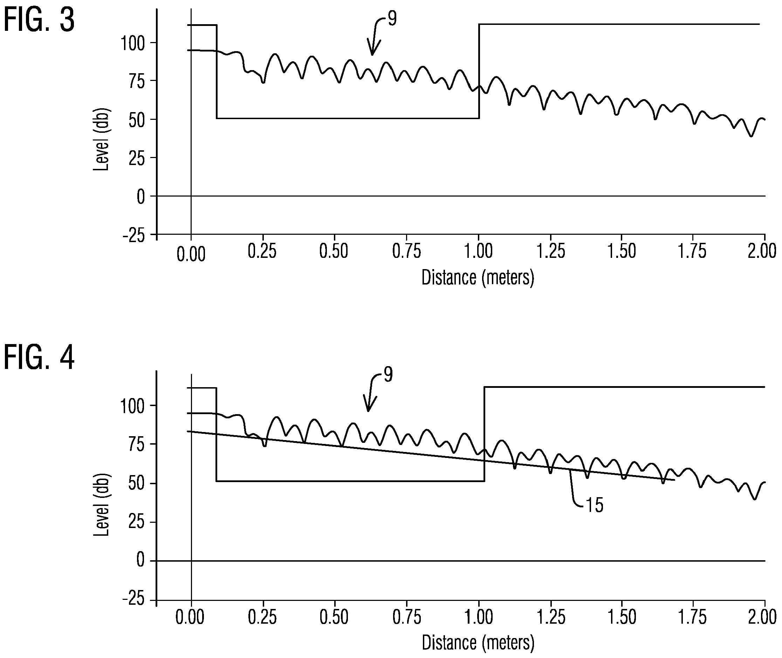

In step 106, a signal processor 14 takes the reflected signal data and forms a reflected signal amplitude profile 9. Fig. 3 shows the display of the reflected signal amplitude profile 9 that is formed from the reflected signal data.

In step 108, an energy decay trend 15, shown in Fig. 4, is determined from the reflected signal amplitude profile 9. The energy decay depends on various parameters that can change depending on the particular application. For instance the environments in which the pulse-echo ranging system 100 is being employed or the materials of the target 16 can impact the energy decay. Generally the energy decays exponentially. However, by taking the log of the decay in the decibel domain the exponential decay typically seen becomes linear. This simplifies the calculation that is made. Furthermore, the energy decay does not depend on phase information. The energy decay trend 15 can then be determined using reflected signal amplitude profile 9 and shape of the peak represented in the signal amplitude profile 9, also known as the envelope. This can be accomplished by doing a least square fit on the envelope.

In order to further save computational costs, the calculations can be done using every N number of samples taken during the formation of the reflected signal amplitude profile 9. For example, if the reflected signal amplitude profile 9 is composed of 2048 samples then to reduce computational costs 1024 samples can be used. A least square fit can then be performed on the reduced reflected signal amplitude profile 9. The energy decay trend 15 can provide a rough decay of the energy that occurs with the reflected signals 13.

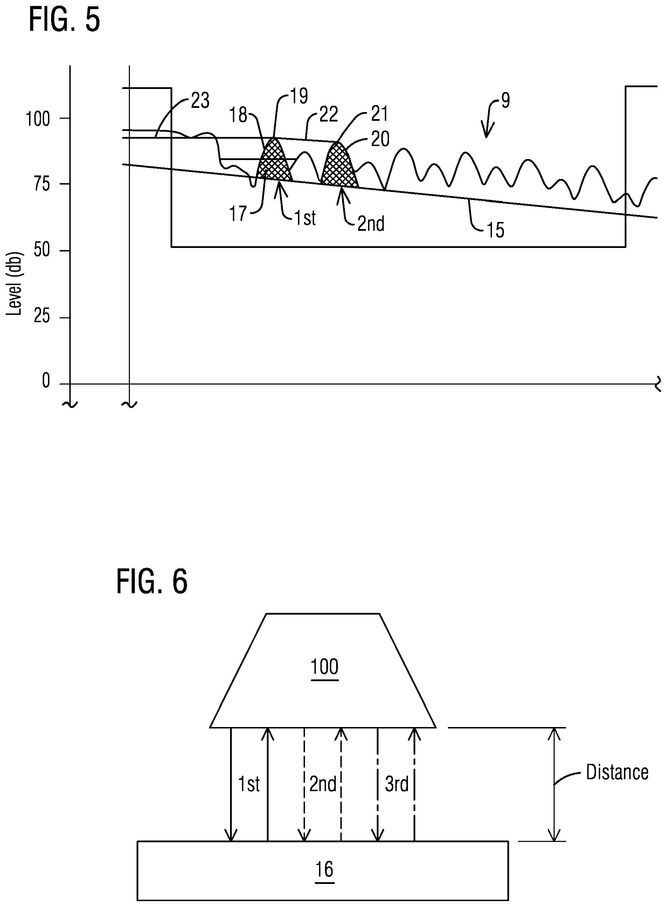

In step 110, a signature 17 of the first reflected signal 18 is obtained. This is shown in Fig. 5. The signature 17 is determined by taking the first determined peak 19 of the first reflected signal 18. The signature 17 can include the height of the first determined peak 19, duration of the signal burst as represented by the reflected signal amplitude profile 9 and the area beneath the first determined peak 19. The area between the first determined peak 19 and the energy decay trend 15 as represented by the reflected signal amplitude profile 9 can represent the energy of the first reflected signal 18. This generally means the area on the reflected signal amplitude profile 9 under the envelope and bordered by the energy decay trend 15.

In step 112, the second reflected signal 20 is located using the signature 17 of the first reflected signal 18. This is accomplished by comparing the signature 17 to the reflected signals 13 as represented in the reflected signal amplitude profile 9. In Fig. 5 the second reflected signal 20 is indicated by the third peak shown. This is the second determined peak 21. This is the reflected signal that is most similar to the first reflected signal 18 that is found on the reflected signal amplitude profile 9. After determining the second reflected signal 20 and its second determined peak 21 the search is stopped. The method then progresses to the next step.

The reason that only the first reflected signal 18 and the second reflected signal 20 are used is that these signals are the only signals that are needed in order to meet the needs of determining the distance to the target 16. Furthermore, in environments which cause difficulties in measuring, such as with product foaming or in cold temperatures, only two reflected signals are typically visible.

In step 114, a first distance to the target 16 is determined by using a peak distance 22. The peak distance 22 is the distance between the first determined peak 19 to the second determined peak 21. The peak distance 22 is roughly equal to the distance to the target 16.

Fig. 6 is a diagram that helps to illustrate why the peak distance 22 between the first determined peak 19 and the second determined peak 21 is roughly equal to the distance to the target 16. The pulse-echo ranging system 100 fires a pulse (the signal 11) at the target 16 which is reflected by the target 16 back to the pulse-echo ranging system, this is the first reflected signal in the reflected signal amplitude profile 9. Part of the reflected signal 11 will be reflected by the surface of the pulse-echo ranging system 100 towards the target 16 again, generating a second reflected signal, and again for the third reflected signal. These are label 1^{st}, 2^{nd} and 3^{rd} in the drawings. The difference between two adjacent reflected signals is roughly the distance to the target 16.

Detecting the second reflected signal 20 using the signature 17 and via the use of energy instead of solely the peak is more accommodating of errors that occur due to the disturbance on the echo shape In the event that only the peaks are used there is a risk that use of the wrong peak will result in inaccurate measurements of the distance. Using the signature 17 determined from the detection of the first determined peak 19 to locate the second determined peak 21 can be more accurate in the presence of distorted reflected signals 13. Signal distortion can be caused by frequency distortion, transducer imperfection, environmental factors, etc.

While the peak distance 22 provides a rough distance to the target 16 it is not necessarily the most accurate measurement of the distance. In order to refine the measurement taken in step 114 and increase its accuracy the information garnered about the first determined peak 19 will be used.

During the measurement process the detection of the first reflected signal 18 can typically be detected with ease using conventional algorithms and methods. However, the first reflected signal 18 may not be the primary reflected signal but in fact be the secondary or tertiary reflected signal. In the event that the actual primary reflected signal is not being detected then the distance may be off by a factor of two or three.

In step 118 a multiplier factor is determined for the first reflected signal 18. The multiplier factor is determined by first taking the determined peak distance 22 (as determined in step 114). The determined peak distance 22 is the first distance to the target 16. Another distance to the target 16 is determined using the first determined peak 19.

The distance measured from the first determined peak 19 to the target 16 is taken and as discussed above may not reflect the actual distance to the target 16. The distance from the first determined peak 19 to the target 16 is then divided by the first determined distance to the target 16. The result of this division product is then rounded to the nearest integer. This results in the multiplier factor.

In step 116, the multiplier factor is then applied to the distance from the first determined peak 19 to the target 16 in order to obtain a second distance to the target 16. This results in an accurate determination of the distance to the target 16. An example of this is provided below.

In this example, the results of step 114 obtain a first distance to the target 16 of 48 mm. The distance from the first determined peak 19 to the target 16 is determined to be 104 mm. This indicates that the first determined peak 19 is not the primary reflected signal and instead is most likely the secondary reflected signal (the primary reflected signal has been obscured due to the ringing down). The value 104 is divided by 48, which results in a number of 2.16. This number is rounded to the nearest integer in order to obtain the multiplier factor. In this instance the multiplier factor will be 2. This number is then used to divide the number 104 mm in order to obtain a value of 52 mm. 52 mm is the second distance to the target 16 determined and is more accurate than the first distance to the target 16 determined in step 112. However the first distance to the target 16 is able to correct errors that may be caused by misidentifying what is the primary peak.

The multiplier factor is also used because the pulse-echo ranging system 100 is calibrated using peak detection. The calibration of the pulse-echo ranging system 100 includes an offset distance (determined during the calibration) that is not present in the distance between two reflected signals 13. Additionally, even when the shapes of the reflected signals 13 are distorted the strongest peaks are usually able to be detected.

## Claims

1. A method for determining distance between an apparatus and a target comprising;
transmitting signals to the target (16) from a transmitter (10) of the apparatus;
receiving reflected signals (13) at a receiver (12) of the apparatus,
forming a reflected signal amplitude profile (9) from the reflected signals (13);
determining an energy decay trend (15) from the reflected signal amplitude profile (9);
obtaining a signature (17) of a first reflected signal (18),
wherein the signature (17) of the first reflected signal (18) is determined using the energy decay trend (15);
locating a second reflected signal (20) using the signature (17) of the first reflected signal (18); and
determining a first distance to the target (16) by using a peak distance (22) between a first determined peak (19) of the first reflected signal (18) and a second determined peak (21) of the second reflected signal (20),
wherein the signature (17) of the first reflected signal (18) includes height of the first determined peak (19), duration of the first reflected signal burst and the area of the first reflected signal (18).

2. The method of claim 1, further comprising determining a multiplier factor for the first reflected signal (18), in particular using the determined first distance to the target (16).

3. The method of claim 2, further comprising applying the multiplier factor to the first determined peak (19) resulting in a second distance to the target (16), wherein the second distance to the target (16) is more accurate than the first distance to the target (16).

4. The method of any one of claims 1-3, wherein the energy decay trend (15) is linear.

5. The method of any one of claims 1-3, wherein the energy decay trend (15) is determined using a least square fit.

6. An apparatus (100) for determining distance to a target (16) comprising;
a transmitter (10) for transmitting signals to the target (16);
a receiver (12) for receiving reflected signals (13); and
a processor (14) configured to determine from the reflected signals (13) a reflected signal amplitude profile (9); wherein the processor (14) determines an energy decay trend (15) from the reflected signal amplitude profile (9); wherein the processor (14) obtains a signature (17) of a first reflected signal (18),
wherein the signature (17) of the first reflected signal (18) is determined using the energy decay trend (15); wherein the processor (14) locates a second reflected signal (20) using the signature (17) of the first reflected signal (18); wherein the processor (14) determines a first distance to the target (16) by using a peak distance (22) between a first determined peak (19) of the first reflected signal (18) and a second determined peak (21) of the second reflected signal (20),
wherein the signature (17) of the first reflected signal (18) includes height of the first determined peak (19), duration of the first reflected signal burst and the area of the first reflected signal (18).

7. The apparatus of claim 6, wherein the processor (14) is configured to determine a multiplier factor for the first reflected signal (18).

8. The apparatus of claim 7, wherein the processor (14) is configured to use the first determined distance to the target to determine the multiplier factor.

9. The apparatus of claim 7, wherein the processor (14) is configured to apply the multiplier factor to the first determined peak (19) to determine a second distance to the target (16), wherein the second distance to the target (16) is more accurate than the first distance to the target (16).

10. The apparatus of any one of claims 7-9, wherein the energy decay trend (15) is linear.

11. The apparatus of any one of claims 7-9, wherein the energy decay trend (15) is determined using a least square fit.

## Patentansprüche

1. Verfahren zur Bestimmung der Distanz zwischen einer Vorrichtung und einem Ziel, umfassend:
Senden von Signalen zu dem Ziel (16) von einem Sender (10) der Vorrichtung;
Empfangen von reflektierten Signalen (13) in einem Empfänger (12) der Vorrichtung,
Bilden eines Reflexionssignal-Amplitudenprofils (9) aus den reflektierten Signalen (13);
Bestimmen eines Energieabklingtrends (15) aus dem Reflexionssignal-Amplitudenprofil (9);
Erhalten einer Signatur (17) eines ersten reflektierten Signals (18),
wobei
die Signatur (17) des ersten reflektierten Signals (18) unter Verwendung des Energieabklingtrends (15) bestimmt wird;
Lokalisieren eines zweiten reflektierten Signals (20) unter Verwendung der Signatur (17) des ersten reflektierten Signals (18); und
Bestimmen einer ersten Distanz zu dem Ziel (16) durch Verwendung einer Spitzendistanz (22) zwischen einer ersten bestimmten Spitze (19) des ersten reflektierten Signals (18) und einer zweiten bestimmten Spitze (21) des zweiten reflektierten Signals (20),
wobei die Signatur (17) des ersten reflektierten Signals (18) Höhe der ersten bestimmten Spitze (19), Dauer des Bursts des ersten reflektierten Signals und Fläche des ersten reflektierten Signals (18) umfasst.

2. Verfahren nach Anspruch 1, ferner umfassend: Bestimmen eines Multiplikatorfaktors für das erste reflektierte Signal (18), insbesondere unter Verwendung der bestimmten ersten Distanz zu dem Ziel (16).

3. Verfahren nach Anspruch 2, ferner umfassend: Anwenden des Multiplikatorfaktors auf die erste bestimmte Spitze (19), was zu einer zweiten Distanz zu dem Ziel (16) führt, wobei die zweite Distanz zu dem Ziel (16) genauer als die erste Distanz zu dem Ziel (16) ist.

4. Verfahren nach einem der Ansprüche 1-3, wobei der Energieabklingtrend (15) linear ist.

5. Verfahren nach einem der Ansprüche 1-3, wobei der Energieabklingtrend (15) unter Verwendung eines Least-Square-Fit bestimmt wird.

6. Vorrichtung (100) zur Bestimmung von Distanz zu einem Ziel (16), umfassend:
einen Sender (10) zum Senden von Signalen zu dem Ziel (16) ;
einen Empfänger (12) zum Empfangen von reflektierten Signalen (13); und
einen Prozessor (14) ausgelegt zum Bestimmen eines Reflexionssignal-Amplitudenprofils (9) aus den reflektierten Signalen (13); wobei der Prozessor (14) einen Energieabklingtrend (15) aus dem Reflexionssignal-Amplitudenprofil (9) bestimmt; wobei der Prozessor (14) eine Signatur (17) eines ersten reflektierten Signals (18) erhält,
wobei die Signatur (17) des ersten reflektierten Signals (18) unter Verwendung des Energieabklingtrends (15) bestimmt wird; wobei der Prozessor (14) unter Verwendung der Signatur (17) des ersten reflektierten Signals (18) ein zweites reflektiertes Signal (20) lokalisiert; wobei der Prozessor (14) durch Verwendung einer Spitzendistanz (22) zwischen einer ersten bestimmten Spitze (19) des ersten reflektierten Signals (18) und einer zweiten bestimmten Spitze (21) des zweiten reflektierten Signals (20) eine erste Distanz zu dem Ziel (16) bestimmt, und
wobei die Signatur (17) des ersten reflektierten Signals (18) Höhe der ersten bestimmten Spitze (19), Dauer des Bursts des ersten reflektierten Signals und Fläche des ersten reflektierten Signals (18) umfasst.

7. Vorrichtung nach Anspruch 6, wobei der Prozessor (14) ausgelegt ist zum Bestimmen eines Multiplikatorfaktors für das erste reflektierte Signal (18).

8. Vorrichtung nach Anspruch 7, wobei der Prozessor (14) ausgelegt ist zum Verwenden der ersten bestimmten Distanz zu dem Ziel zur Bestimmung des Multiplikatorfaktors.

9. Vorrichtung nach Anspruch 7, wobei der Prozessor (14) ausgelegt ist zum Anwenden des Multiplikatorfaktors auf die erste bestimmte Spitze (19) zur Bestimmung einer zweiten Distanz zu dem Ziel (16), wobei die zweite Distanz zu dem Ziel (16) genauer als die erste Distanz zu dem Ziel (16) ist.

10. Vorrichtung nach einem der Ansprüche 7-9, wobei der Energieabklingtrend (15) linear ist.

11. Vorrichtung nach einem der Ansprüche 7-9, wobei der Energieabklingtrend (15) unter Verwendung eines Least-Square-Fit bestimmt wird.

## Revendications

1. Procédé de détermination de distance entre un appareil et une cible comprenant :
la transmission de signaux à la cible (16) depuis un émetteur (10) de l'appareil ;
la réception des signaux réfléchis (13) au niveau d'un récepteur (12) de l'appareil,
la formation d'un profil (12) d'amplitude de signal réfléchi à partir des signaux réfléchis (13) ;
la détermination d'une tendance de diminution d'énergie (15) à partir du profil (9) d'amplitude de signal réfléchi ;
l'obtention d'une signature (17) d'un premier signal réfléchi (18), la signature (17) du premier signal réfléchi (18) étant déterminée en utilisant la tendance de diminution d'énergie (15) ;
la localisation d'un deuxième signal réfléchi (20) en utilisant la signature (17) du premier signal réfléchi (18) ; et
la détermination d'une première distance jusqu'à la cible (16) en utilisant une distance (22) de pics entre un premier pic déterminé (19) du premier signal réfléchi (18) et un deuxième pic déterminé (21) du deuxième signal réfléchi (20),
la signature (17) du premier signal réfléchi (18) incluant la hauteur du premier pic déterminé (19), la durée de la première salve de signal réfléchi et l'aire du premier signal réfléchi (18).

2. Procédé selon la revendication 1, comprenant en outre la détermination d'un facteur multiplicateur pour le premier signal réfléchi (18), plus particulièrement en utilisant la première distance déterminée jusqu'à la cible (16).

3. Procédé selon la revendication 2, comprenant en outre l'application du facteur multiplicateur au premier pic déterminé (19) en résultant une deuxième distance jusqu'à la cible (16), la deuxième distance jusqu'à la cible (16) étant plus précise que la première distance jusqu'à la cible (16).

4. Procédé selon l'une quelconque des revendications 1 à 3, la tendance de diminution d'énergie (15) étant linéaire.

5. Procédé selon l'une quelconque des revendications 1 à 3, la tendance de diminution d'énergie (15) étant déterminée en utilisant ajustement par les moindres carrés.

6. Appareil (100) de détermination de distance jusqu'à une cible (16) comprenant ;
un émetteur (10) pour transmettre des signaux à la cible (16) ;
un récepteur (12) pour recevoir des signaux réfléchis (13) ; et
un processeur (14) configuré pour déterminer à partir des signaux réfléchis (13) un profil (9) d'amplitude de signal réfléchi ; le processeur (14) déterminant une tendance de diminution d'énergie (15) à partir du profil (9) d'amplitude de signal réfléchi ; le processeur (14) obtenant une signature (17) d'un premier signal réfléchi (18),
la signature (17) du premier signal réfléchi (18) étant déterminée en utilisant la tendance de diminution d'énergie (15) ; le processeur (14) localisant un deuxième signal réfléchi (20) en utilisant la signature (17) du premier signal réfléchi (18) ; le processeur (14) déterminant une première distance jusqu'à la cible (16) en utilisant une distance (22) de pics entre un premier pic déterminé (19) du premier signal réfléchi (18) et un deuxième pic déterminé (21) du deuxième signal réfléchi (20),
la signature (17) du premier signal réfléchi (18) incluant la hauteur du premier pic déterminé (19), la durée de la première salve de signal réfléchi et l'aire du premier signal réfléchi (18).

7. Appareil selon la revendication 6, le processeur (14) étant configuré pour déterminer un facteur multiplicateur pour le premier signal réfléchi (18).

8. Appareil selon la revendication 7, le processeur (14) étant configuré pour utiliser la première distance déterminée jusqu'à la cible pour déterminer le facteur multiplicateur.

9. Appareil selon la revendication 7, le processeur (14) étant configuré pour appliquer le facteur multiplicateur au premier pic déterminé (19) pour déterminer une deuxième distance jusqu'à la cible (16), la deuxième distance jusqu'à la cible (16) étant plus précise que la première distance jusqu'à la cible (16).

10. Appareil selon l'une quelconque des revendications 7 à 9, la tendance de diminution d'énergie (15) étant linéaire.

11. Appareil selon l'une quelconque des revendications 7 à 9, la tendance de diminution d'énergie (15) étant déterminée en utilisant un ajustement par les moindres carrés.
